Europäisches Patentamt

European Patent Office

Office européen des brevets

(11) EP 0 772 287 B1

(19)

(12) FASCICULE DE BREVET EUROPEEN

(45) Date de publication et mention
de la délivrance du brevet:
**12.01.2000 Bulletin 2000/02**

(51) Int Cl.$^7$: **H02M 3/335**

(21) Numéro de dépôt: **96410111.7**

(22) Date de dépôt: **25.10.1996**

(54) **Alimentation à découpage à correction de facteur de puissance**

Schaltnetzteil mit Leistungsfaktorkorrektur

Switching power supply with power factor correction

(84) Etats contractants désignés:
**DE FR GB IT**

(30) Priorité: **30.10.1995 FR 9513041**

(43) Date de publication de la demande:
**07.05.1997 Bulletin 1997/19**

(73) Titulaire: **STMicroelectronics S.A.**
**94250 Gentilly (FR)**

(72) Inventeur: **Moreau, Jean-Michel**
**38100 Grenoble (FR)**

(74) Mandataire: **de Beaumont, Michel**
**1bis, rue Champollion**
**38000 Grenoble (FR)**

(56) Documents cités:
**US-A- 5 420 776**

**Description**

La présente invention concerne des alimentations à découpage de type à conduction alternée (flyback) et plus particulièrement de telles alimentations munies d'un système de correction de facteur de puissance.

Des alimentations à découpage à correction de facteur de puissance sont connues dans l'art antérieur et un exemple en est décrit dans la publication des laboratoires RCA, MRZ-339, mars 1992, intitulée "Single Converter High Power Factor SMPS" de M. Megeid.

La figure 1 ci-jointe reproduit les éléments essentiels de la figure 2A de ce document.

Les bornes A et B du secteur sont reliées à un pont redresseur double alternance BR dont les bornes de sortie positive et négative X et Y sont reliées à un enroulement primaire W1, en série avec un commutateur de découpage S1 d'une alimentation à découpage de type "flyback". Cette alimentation à découpage comprend un enroulement secondaire W2 couplé à l'enroulement W1 et associé à un redresseur de façon à ne pas laisser passer de courant dans l'enroulement W2 quand l'enroulement W1 est conducteur mais à transmettre un courant quand la conduction dans l'enroulement W1 cesse. Le circuit secondaire de cette alimentation à découpage comprend de façon classique une diode D en série avec un condensateur de stockage C en parallèle avec lequel est disposée une charge L.

Entre les bornes X et Y est disposé un condensateur de stockage C1. Pour améliorer le facteur de puissance, c'est-à-dire pour que le secteur fournisse un courant pendant une durée plus longue que celle nécessaire à la charge du condensateur, il est prévu dans le document cité un montage de type particulier. Ce montage comprend, entre les bornes X et Y, la connexion en série avec le condensateur C1 d'une diode D1 et d'un commutateur S2. La diode D1 est polarisée pour interdire la charge du condensateur C1 par la tension redressée présente entre les bornes X et Y. La charge du condensateur C1 est assurée par la connexion de ce condensateur C1 aux bornes d'un enroulement auxiliaire W3 en série avec une diode D2. La diode D2 est polarisée dans un sens propre à permettre la charge du condensateur C1. Selon une caractéristique de ce circuit, l'enroulement W3 est couplé à l'enroulement W1 dans le mode "flyback", c'est-à-dire qu'il ne fonctionne pas avec cet enroulement W1 en transformateur de tension mais en conduction de courant alternée.

L'avantage de ce circuit, tel qu'il est exposé par son auteur, est qu'il permet de choisir toute valeur désirée de la tension aux bornes du condensateur C1.

Toutefois, ce circuit présente deux inconvénients majeurs.

Un premier inconvénient est que, du fait du fonctionnement en conduction alternée de l'enroulement W3 par rapport à l'enroulement W1, comme de l'enroulement W2 par rapport à l'enroulement W1, la tension de charge aux bornes du condensateur C1 est liée à la tension régulée fixée par le commutateur S1. Cette tension ne suit donc pas la tension du secteur.

Un deuxième inconvénient est que, toujours en raison du mode de conduction alternée entre l'enroulement W3 et l'enroulement W1, il est nécessaire de prévoir un commutateur S2 disposé de la façon représentée. Ce commutateur S2 présente l'inconvénient d'être coûteux et de nécessiter un circuit de commande.

Un autre inconvénient de ce circuit est que la puissance disponible sur l'enroulement W3 résulte de la puissance fournie par l'enroulement W1. Ceci entraîne que, pendant les périodes de fermeture du commutateur S1, il circule dans ce commutateur un courant plus important que le courant normalement nécessaire pour l'alimentation à découpage, d'où il résulte la nécessité de surdimensionner le commutateur S1 et donc d'augmenter son coût.

La présente invention vise à prévoir un circuit d'alimentation à découpage à correction de facteur de puissance conservant les avantages des circuits de l'art antérieur tout en évitant les inconvénients de ces circuits.

Un objet de la présente invention est de prévoir un circuit d'alimentation à découpage plus simple que les circuits de l'art antérieur.

Un autre objet de la présente invention est de prévoir un circuit d'alimentation à découpage plus facile à commander que les circuits de l'art antérieur.

Pour atteindre ces objets, la présente invention prévoit un circuit de fourniture de tension redressée à un circuit d'alimentation à découpage de type à conduction alternée, comprenant un pont redresseur ayant des bornes de sortie positive et négative, dans lequel l'enroulement primaire de l'alimentation à découpage est un enroulement à prise intermédiaire en série avec un commutateur de découpage. Ce circuit comprend, entre les bornes de sortie, la connexion en série d'une première diode et d'un condensateur, la première diode étant polarisée pour permettre la charge du condensateur à partir des bornes de sortie ; une deuxième diode entre une première des bornes de sortie et la prise intermédiaire ; et une troisième diode entre le point de connexion de la première diode et du condensateur et le point haut dudit enroulement, les deuxième et troisième diodes étant polarisées pour permettre le passage d'un courant vers le point bas de l'enroulement.

Selon un mode de réalisation de la présente invention, le circuit comprend un élément d'impédance en série avec la première diode et le condensateur.

Selon un mode de réalisation de la présente invention, les nombres de spires ($n1$ et $n2$) de part et d'autre de la prise intermédiaire sont choisis pour que le rapport $n2/(n1+n2)$ soit de l'ordre de 70%, d'où il résulte que le condensateur prend le relais de l'alimentation redressée pour alimenter l'enroulement principal quand la tension du secteur chute en dessous de 70 % de sa valeur crête.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, décrite précédemment, représente un exemple de circuit d'alimentation à découpage à facteur de puissance amélioré selon l'art antérieur ; et

la figure 2 représente un mode de réalisation d'un circuit selon la présente invention.

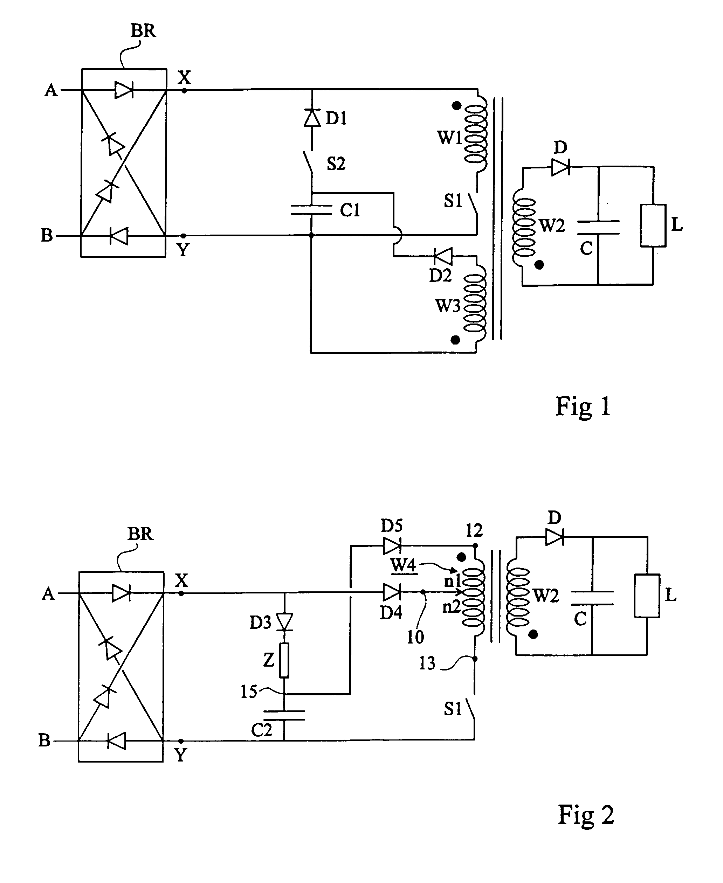

Le circuit de la figure 2 comprend un pont redresseur BR et un circuit d'alimentation à découpage tel que décrit de façon générale en relation avec la figure 1.

Entre les bornes de sortie X et Y du pont redresseur sont disposées en série une diode D3, une impédance Z et un condensateur C2. L'enroulement primaire de l'alimentation à découpage, en série avec le commutateur S1, est un enroulement W4 muni d'une prise intermédiaire 10. La borne supérieure de l'enroulement est désignée par la référence 12 et la borne inférieure par la référence 13. La borne X est reliée à la prise intermédiaire 10 par une diode D4. Le point de connexion 15 du condensateur C2 et de l'impédance Z est connecté à la borne 12 par une diode D5. Les diodes D4 et D5 sont polarisées pour laisser passer un courant positif vers la borne Y quand le commutateur S1 est fermé.

Dans ce circuit, le condensateur C2, connecté par l'intermédiaire de la diode D3 et de l'impédance Z entre les bornes de sortie X et Y du pont redresseur, se charge sensiblement à la tension crête Vp du secteur.

On considérera que l'enroulement W4 comprend nl spires entre la prise intermédiaire 10 et la borne 12 et n2 spires entre la prise intermédiaire 10 et la borne 13.

Quand la tension du secteur est supérieure à une valeur déterminée V1 telle que :

$$V1 = [n2/(n1 + n2)]Vp,$$

l'alimentation est assurée à partir du secteur à travers la diode D4. En effet, la borne 12 est alors à un potentiel supérieur à la valeur Vp et la diode D5 est polarisée en inverse.

Quand la tension du secteur chute en dessous de la valeur V1, la diode D5 se trouve polarisée en direct et c'est le condensateur C2 qui alimente l'enroulement W4.

Grâce à ce montage particulièrement simple, on peut, en fonction du choix du rapport n1/n2, déterminer le moment où le condensateur C2 prendra le relais du secteur pour alimenter le circuit. La période d'alimentation par le secteur sera choisie plus ou moins étendue en fonction de l'amêlioration du facteur de puissance que l'on recherche. Par exemple, les nombres de spires nl et n2 seront choisis pour que le rapport n2/(n1+n2) soit de l'ordre de 70%, de sorte que le condensateur prend le relais de l'alimentation redressée pour alimenter l'enroulement primaire quand la tension du secteur chute en dessous de 70 % de sa valeur crête.

Un avantage de la disposition de la figure 2 est que le commutateur S1 ne voit pas le passage du courant nécessaire à la charge du condensateur C2 et ne devra donc pas être surdimensionné par rapport au commutateur d'une alimentation à découpage non munie d'un système de correction de facteur de puissance.

Bien entendu, la présente invention est susceptible de diverses variantes et modifications qui apparaîtront à l'homme de l'art. Notamment on pourra prévoir une inversion des diverses polarisations et branchements.

## Revendications

**1.** Circuit de fourniture d'une tension redressée à un circuit d'alimentation à découpage de type à conduction alternée, comprenant un pont redresseur ayant des bornes de sortie positive (X) et négative (Y), caractérisé en ce que l'enroulement primaire de l'alimentation à découpage est un enroulement (W4) à prise intermédiaire (10) en série avec un commutateur de découpage (S1), et en ce que ledit circuit comprend :

entre lesdites bornes de sortie, la connexion en série d'une première diode (D3) et d'un condensateur (C2), la première diode (D3) étant polarisée pour permettre la charge du condensateur à partir desdites bornes de sortie ;
une deuxième diode (D4) entre une première (X) desdites bornes de sortie et la prise intermédiaire (10) ; et
une troisième diode (D5) entre le point de connexion (15) de la première diode (D3) et du condensateur (C2) et le point haut (12) dudit enroulement, les deuxième et troisième diodes (D4, D5) étant polarisées pour permettre le passage d'un courant vers le point bas (13) de l'enroulement (W4).

**2.** Circuit selon la revendication 1, caractérisé en ce qu'il comprend un élément d'impédance (Z) en série avec la première diode (D3) et le condensateur (C2).

**3.** Circuit selon la revendication 1 ou 2, caractérisé en ce que les nombres de spires (n1 et n2) de part et d'autre de la prise intermédiaire sont choisis pour que le rapport n2/(n1+n2) soit de l'ordre de 70%, d'où il résulte que le condensateur (C2) prend le relais de l'alimentation redressée pour alimenter l'enroulement principal quand la tension du secteur chute en dessous de 70 % de sa valeur crête.

**Patentansprüche**

1. Schaltung zur Zufuhr einer Gleichrichtspannung an eine Schalt-Stromversorgungsschaltung vom Typ mit alternierender Leitung (fly-back), welche eine Gleichrichtbrücke mit einem positiven (X) und einem negativen (Y) Ausgangsanschluß umfaßt, dadurch gekennzeichnet, daß die Primärwicklung der Schalt-Stromversorgung eine Wicklung (W4) mit Zwischenabgriff (10) in Reihe mit einem Schalt-Unterbrecherschalter (S1) ist und daß die genannte Schaltung umfaßt:

   - zwischen den genannten Ausgangsanschlüssen die Reihenschaltung einer ersten Diode (D3) und eines Kondensators (C2), mit solcher Polung der Diode (D3), daß sie die Ladung des Kondensators aus den Ausgangsanschlüssen gestattet;

   - eine zweite Diode (D4) zwischen einem ersten (X) der genannten Ausgangsanschlüsse und dem Zwischenabgriff (10); sowie

   - eine dritte Diode (D5) zwischen dem Verbindungsknotenpunkt (15) der ersten Diode (D3) und des Kondensators (C2) und dem oberen Anschluß (12) der genannten Wicklung, wobei die zweite und die dritte Diode (D4, D5) so gepolt sind, daß sie einen Stromfluß zum unteren Punkt (13) der Wicklung (W4) zulassen.

2. Schaltung nach Anspruch 1, dadurch gekennzeichnet, daß sie ein Impedanzelement (Z) in Reihe mit der ersten Diode (D3) und dem Kondensator (C2) aufweist.

3. Schaltung nach Anspruch 1 oder 2, dadurch gekennzeichnet, daß die Windungszahlen (nl und n2) zu beiden Seiten des Zwischenabgriffs so gewählt werden, daß das Verhältnis n2/(n1+n2) in der Größenordnung von 70 % liegt, mit der Folge, daß der Kondensator (C2) anstelle der Gleichrichtstromversorgung die Speisung der Hauptwicklung übernimmt, sobald die Netzspannung unter 70 % ihres Scheitelwerts absinkt.

**Claims**

1. A circuit for providing a rectified voltage to a flyback switch-mode supply circuit, comprising a rectifying bridge having positive (X) and negative (Y) output terminals characterized in that the primary winding of the switch-mode supply is a winding (W4) having an intermediate tap (10) in series with a switch (S1), and in that said circuit comprises:

   the serial connection, between said output terminals, of a first diode (D3) and a capacitor (C2), the first diode (D3) being biased so as to allow the charging of the capacitor from said output terminals;
   a second diode (D4) between a first (X) of said output terminals and the intermediate tap (10); and
   a third diode (D5) between the junction (15) of the first diode (D3) and the capacitor (C2) and a higher terminal (12) of said winding, the second and third diodes (D4, D5) being biased so as to let the current flow towards a lower terminal (13) of the winding (W4).

2. The circuit of claim 1, characterized in that it comprises an impedance (Z) in series with said first diode (D3) and said capacitor (C2).

3. The circuit of claim 1 or 2, characterized in that said winding comprises a first plurality (nl) of turns on one side of the intermediate tap and a second plurality (n2) of turns on the other side of the intermediate tap, nl and n2 being selected so that the ratio n2/(n1+n2) equals substantially 70%, whereby the capacitor (C2) feeds the main winding instead of the rectified supply when the mains voltage is less than 70% of its peak value.

Fig 1

Fig 2